# EUROPEAN PATENT APPLICATION

(11) **EP 4 823 217 A1**
(43) Date of publication of application: **14.10.2026**
(21) Application number: 23960474.7
(22) Date of filing: 05.12.2023
(51) Int. Cl.: H04W 74/00

(54) **ACCESS METHOD, FIRST DEVICE AND SECOND DEVICE**

(71) Applicant: GUANGDONG OPPO MOBILE TELECOMMUNICATIONS CORP., LTD., Dongguan, Guangdong 523860 (CN)
(72) Inventor: DU, Zhongda, Dongguan, Guangdong 523860 (CN)
(74) Representative: Mewburn Ellis LLP
(86) International application number: PCT/CN2023/136567
(87) International publication number: WO 2025/118160

(57) **Abstract**

The present application relates to an access method, a first device, a second device, a chip, a computer readable storage medium, a computer program product, a computer program, and a communication system. The access method comprises: upon sending a first access message to at least one second device, a first device receives a response message for the first access message sent by a target device among the at least one second device, the response message comprising a first parameter of the target device, and the first parameter being used for identifying the target device among the at least one second device; and the first device sends a second access message to the at least one second device, wherein the second access message comprises the first parameter. Embodiments of the present application realize the distinguishing of accessed second devices during initial access, and solve the conflict between different second devices.

## Description

### TECHNICAL FIELD

The present application relates to the field of communications, and more specifically, to an access method, a first device, a second device, a chip, a computer-readable storage medium, a computer program product, a computer program, and a communication system.

### RELATED ART

In wireless communication systems, interference between devices is ubiquitous. To address the interference issue during the initial access procedure, random access resources for accessing different cells are staggered in at least one of the time domain, frequency domain or code domain. However, with the rise of the Internet of Things (IoT), new challenges have emerged in current wireless communications, requiring support for access of lower-capability devices to nodes in the network. Existing inter-cell interference cancellation means may not be applicable. Therefore, it is necessary to consider how to avoid contentions among different devices in the network.

### SUMMARY

Embodiments of the present application provide an access method, a first device, a second device, a chip, a computer-readable storage medium, a computer program product, a computer program, and a communication system, which can be used to avoid contentions among different devices during an initial access procedure.

The embodiments of the present application provide an access method, which includes:
receiving, by a first device after transmitting a first access message to at least one second device, a response message to the first access message transmitted by a target device among the at least one second device, where the response message includes a first parameter of the target device, and the first parameter is used to identify the target device among the at least one second device; and
transmitting, by the first device, a second access message to the at least one second device, where the second access message includes the first parameter.

The embodiments of the present application provide an access method, which includes:
receiving, by a second device, a first access message from a first device;
transmitting, by the second device, a response message to the first access message to the first device, where the response message includes a first parameter of the second device, the first parameter is used to identify the second device, and the response message is used to trigger transmission of a second access message; and
receiving, by the second device, the second access message from the first device, and determining that the first device accesses in a case where the second access message includes the first parameter and a first identifier of the first device.

The embodiments of the present application provide a first device, which includes:
a first communication module, configured to receive, after transmitting a first access message to at least one second device, a response message to the first access message transmitted by a target device among the at least one second device, where the response message includes a first parameter of the target device, and the first parameter is used to identify the target device among the at least one second device; and
the first communication module, further configured to transmit a second access message to the at least one second device, where the second access message includes the first parameter.

The embodiments of the present application provide a second device, which includes:
a second communication module, configured to receive a first access message from a first device, transmit a response message to the first access message to the first device, and receive a second access message from the first device, where the response message includes a first parameter of the second device, the first parameter is used to identify the second device, and the response message is used to trigger transmission of the second access message; and
a second processing module, configured to determine that the first device accesses in a case where the second access message includes the first parameter and a first identifier of the first device.

The embodiments of the present application provide a first device, which includes: a transceiver, a processor and a memory. The memory is configured to store a computer program; the transceiver is configured to communicate with other devices; and the processor is configured to invoke the computer program stored in the memory and execute the computer program, to cause the first device to perform the access method described above.

The embodiments of the present application provide a second device, which includes: a transceiver, a processor and a memory. The memory is configured to store a computer program; the transceiver is configured to communicate with other devices; and the processor is configured to invoke the computer program stored in the memory and execute the computer program, to cause the second device to perform the access method described above.

The embodiments of the present application provide a chip for implementing the access methods described above.

Specifically, the chip includes a processor, configured to invoke a computer program from a memory and execute the computer program, to cause a device equipped with the chip to perform the access methods described above.

The embodiments of the present application provide a computer-readable storage medium for storing a computer program that, when executed by a device, causes the device to perform the access methods described above.

The embodiments of the present application provide a computer program product including computer program instructions, and the computer program instructions cause a computer to perform the access methods described above.

The embodiments of the present application provide a computer program that, when executed on a computer, causes a computer to perform the access methods described above.

The embodiments of the present application provide a communication system, which includes a first device and a second device used for the access methods described above.

In the embodiments of the present application, the first device initiates initial access by transmitting the first access message, and the response message transmitted by each second device in the network includes the first parameter used to identify the respective second device. After receiving the response message, the first device transmits the second access message including the received first parameter, enabling each second device to perform corresponding processing according to the first parameter in the second access message, thereby achieving the differentiation of the second devices during the initial access procedure and resolving the contentions among different second devices.

### BRIEF DESCRIPTION OF DRAWINGS

FIG. 1 is a schematic diagram of a communication system in an embodiment of the present application.
FIG. 2A is a schematic flowchart of a 4-step contention based random access (CBRA).
FIG. 2B is a schematic flowchart of a 2-step CBRA.
FIG. 3 is a schematic diagram of a basic architecture of an ambient IoT (A-IoT) communication system.
FIG. 4A is a schematic diagram of a first type of topological network structure in an A-IoT communication system.
FIG. 4B is a schematic diagram of a second type of topological network structure in an A-IoT communication system.
FIG. 4C is a schematic diagram of a third type of topological network structure in an A-IoT communication system.
FIG. 4D is a schematic diagram of a fourth type of topological network structure in an A-IoT communication system.
FIG. 5A is a structural diagram of a typical broadband receiver.
FIG. 5B is a structural diagram of a typical intermediate frequency receiver.
FIG. 6 is a schematic diagram of an application scenario according to an embodiment of the present application.
FIG. 7 is a schematic flowchart of an access method according to an embodiment of the present application.
FIG. 8 is a schematic flowchart of an access method according to another embodiment of the present application.
FIG. 9 is a schematic diagram illustrating a method for allocating a first parameter in an application example.
FIG. 10 is a schematic diagram of application example I of an access method according to an embodiment of the present application.
FIG. 11 is a schematic diagram of application example II of an access method according to an embodiment of the present application.
FIG. 12 is a schematic block diagram of a first device according to an embodiment of the present application.
FIG. 13 is a schematic block diagram of a first device according to another embodiment of the present application.
FIG. 14 is a schematic block diagram of a second device according to an embodiment of the present application.
FIG. 15 is a schematic block diagram of a communication device according to an embodiment of the present application.
FIG. 16 is a schematic block diagram of a chip according to an embodiment of the present application.
FIG. 17 is a schematic block diagram of a communication system according to an embodiment of the present application.

### DETAILED DESCRIPTION

Technical solutions in the embodiments of the present application will be described below in conjunction with accompanying drawings in the embodiments of the present application.

The technical solutions in the embodiments of the present application may be applied to various communication systems, such as: a long term evolution (LTE) system, an advanced long term evolution (LTE-A) system, a new radio (NR) system, an evolution system of an NR system, an LTE-based access to unlicensed spectrum (LTE-U) system, an NR-based access to unlicensed spectrum (NR-U) system, a non-terrestrial networks (NTN) system, a universal mobile telecommunication system (UMTS), a wireless local area network (WLAN), wireless fidelity (WiFi), a 5th-Generation (5G) communication system, or other communication systems.

Generally speaking, conventional communication systems support a limited number of connections and are relatively easy to implement. However, with the development of communication technologies, mobile communication systems support not only the conventional communications but also communications such as device to device (D2D) communication, machine to machine (M2M) communication, machine type communication (MTC), vehicle to vehicle (V2V) communication, or vehicle to everything (V2X) communication. The embodiments of the present application may also be applied to such communication systems.

In an implementation, the communication system in the embodiments of the present application may be applied to a carrier aggregation (CA) scenario, a dual connectivity (DC) scenario, or a standalone (SA) networking scenario.

In an implementation, the communication system in the embodiments of the present application may be applied to an unlicensed spectrum. The unlicensed spectrum may also be considered as a shared spectrum. Alternatively, the communication system in the embodiments of the present application may be applied to a licensed spectrum. The licensed spectrum may also be considered as an unshared spectrum.

In the embodiments of the present application, various embodiments are described in conjunction with a network device and a terminal device. The terminal device may also be referred to as a user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (STAION, ST) in the WLAN, which may be a cellular phone, a cordless phone, a session initiation protocol (SIP) phone, a wireless local loop (WLL) station, a personal digital assistant (PDA) device, a handheld device with wireless communication functions, a computing device or other process devices connected to a wireless modem, a vehicle-mounted device, a wearable device, a terminal device in a next-generation communication system (such as an NR network), a terminal device in a future evolved public land mobile network (PLMN), or the like.

In the embodiments of the present application, the terminal device may be deployed on land, including indoor or outdoor, handheld, wearable or vehicle-mounted, or may also be deployed on water (e.g., on a ship), or may also be deployed in air (e.g., on an airplane, a balloon, and a satellite).

In the embodiments of the present application, the terminal device may be a mobile phone, a pad, a computer with wireless transceiving functions, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, or the like.

As an example but not a limitation, in the embodiments of the present application, the terminal device may also be a wearable device. The wearable device, which may also be referred to as a wearable smart device, is a generic term for devices capable of being worn, into which the daily wear is intelligently designed and developed by applying wearable technologies, such as glasses, gloves, watches, clothing, or shoes. The wearable device is a portable device that is worn directly on the body, or integrated into a user's clothing or accessories. The wearable device is not only a hardware device, but also a device that achieves powerful functions through software support, data interaction or cloud interaction. Generalized wearable smart devices include full-featured and large-sized devices that may implement full or partial functionality without relying on smart phones, such as a smart watch or smart glasses, and devices that focus on a specific type of application functionality only and need to be used in conjunction with other devices (such as smart phones), such as various smart bracelets or smart jewelry for monitoring physical signs.

In embodiments of the present application, the network device may be a device used for communicating with a mobile device. The network device may be an access point (AP) in WLAN, an evolutional base station (NodeB, eNB or eNodeB) in LTE, a relay station or an access point, a vehicle-mounted device, a wearable device, a network device (gNB) in an NR network, or a network device in a future evolved PLMN network, a network device in an NTN network, or the like.

As an example but not a limitation, in the embodiments of the present application, the network device may have mobile characteristics. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may be a base station provided on land, water or other places.

In the embodiments of the present application, the network device may provide services for a cell, and the terminal device communicates with the network device through transmission resources (e.g., frequency domain resources, or in other words, frequency spectrum resources) used by the cell. The cell may be a cell corresponding to the network device (e.g., a base station). The cell may belong to a macro base station or belong to a base station corresponding to a small cell. The small cell here may include a metro cell, a micro cell, a pico cell, a femto cell or the like. These small cells have characteristics of small coverage range and low transmit power, which are applicable for providing a data transmission service with high rate.

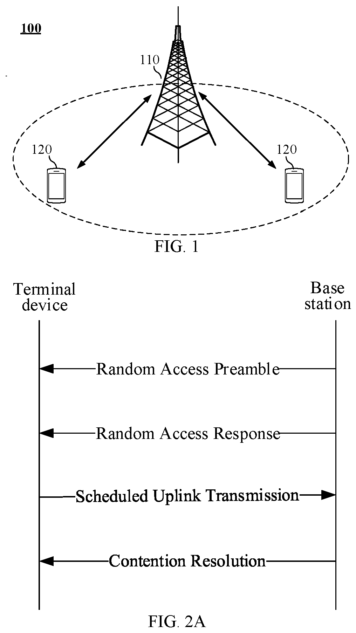

FIG. 1 exemplarily illustrates a communication system 100. The communication system includes a network device 110 and two terminal devices 120. In an implementation, the communication system 100 may include multiple network devices 110, and the coverage range of each network device 110 may include another number of terminal devices 120, which is not limited in the embodiments of the present application.

It should be understood that the terms "system" and "network" are often used interchangeably herein. The term "and/or" herein is only an association relationship to describe associated objects, which means that there may be three kinds of relationships. For example, A and/or B may represent three cases that: A exists alone, both A and B exist, and B exists alone. In addition, the character "/" herein generally means that related objects before and after "/" are in an "or" relationship.

It should be understood that "indicate" mentioned in the embodiments of the present application may mean a direct indication, or may mean an indirect indication, or may mean that there is an association relationship. By way of example, A indicating B may mean that A directly indicates B (for example, B may be obtained by A), or may mean that A indirectly indicates B (for example, A indicates C, and B may be obtained by C), or may mean that there is an association relationship between A and B.

In the description of the embodiments of the present application, the term "correspond" may mean that there is a direct correspondence or indirect correspondence relationship between the two, or may mean that there is an associated relationship between the two, or may mean a relationship of indicating and being indicated, a relationship of configuring and being configured, or the like.

To facilitate understanding of the technical solutions in the embodiments of the present application, the related technologies of the embodiments of the present application will be described below. The following related technologies, as optional solutions, may be arbitrarily combined with the technical solutions of the embodiments of the present application, which all fall within the protection scope of the embodiments of the present application.

### (I) Random Access

In 3rd Generation Partnership Project (3GPP) communication systems, initial access at the medium access control (MAC) layer generally has two ways: namely 2-step random access (2-step RACH) and 4-step random access (4-step RACH). Regardless of which random access channel (RACH) procedure, the resolution of random access contention is performed within a single cell. This is because in 3GPP cellular communication systems (including 4G and 5G), before initiating a random access procedure, a terminal first obtains frequency and time synchronization with the current serving cell, and then initiates the random access procedure on the random access radio resources broadcast by the serving cell. Generally, different serving cells either have different frequencies (e.g., including a low-frequency cell responsible for coverage and a high-frequency cell having overlapping coverage with the low-frequency cell), or have asynchronous system times, or both. Even for serving cells that are synchronized in both frequency point and time (e.g., different sectors of the same base station), to avoid mutual interference, the physical random access channel (PRACH) resources used for random access are staggered in the time domain, frequency domain and/or code domain (Zadoff-Chu (ZC) codes used to generate preambles). In this way, when a terminal initiates random access in a certain coverage cell, even if the transmitted preamble is received by a neighboring cell, the base station can easily identify and discard the preamble of the terminal from the neighboring cell.

The 4-step random access procedure was introduced in LTE systems and is also applied in NR systems. As described above, before initiating the RACH procedure, a terminal first needs to obtain the PRACH resource configuration from the system message or dedicated signaling of the network. FIG. 2A is a schematic flowchart of a 4-step contention based random access (CBRA), and as illustrated in FIG. 2A, the 4-step CBRA includes the following 4 steps.

Step 1: the terminal transmits a random access preamble to the base station. The preamble is referred to as message 1 in the MAC layer protocol. After transmitting the preamble, the terminal waits for message 2 fed back by the base station within a subsequent response window (reception window). The start time and end time of the response window are set according to configuration parameters. From the perspective of the base station, the base station is capable of differentiating preambles received in different time-frequency domains, or different preambles in the same time-frequency domain. However, the base station cannot differentiate the same preamble received from multiple terminals in the same time-frequency domain, and in this case, the access contention will occur.

Step 2: the base station feeds back message2 to the terminal. Message2 may be a group message, that is, message2 may include RAR (Random Access Response) messages for multiple terminals. The addressing information of message2 is included in a group identifier called random access-radio network temporary identifier (RA-RNTI), which is used to identify the time domain, frequency domain and carrier type information of the received preamble. That is, preambles received on the same time-frequency point from the same carrier can be combined into the same message2. The RAR information elements (IEs) transmitted to each terminal include a temporary identifier T_C_RNTI configured for the terminal, a timing advance (for uplink synchronization), the radio resource grant uplink grant (UL-grant) for transmitting message3 and the index (or sequence number) of the received preamble. Message2 may also include a backoff parameter to mitigate the contention of uplink preambles. If the terminal decides to retransmit the preamble, it will generate a random time based on the backoff parameter, so that the next preamble transmission time is at least later than the generated random time.

Step 3: after comparing the RA-RNTI and the preamble index in the RAR, the terminal may determine whether the base station has received the preamble it transmitted. After determining that the correct RAR is received, the terminal transmits message 3 based on the UL-grant, where message 3 includes at least the identifier of the terminal (UE ID). Message3 is addressed on the physical layer using the T_C_RNTI. The terminal then starts a timer, and during the running of the timer, it monitors the physical downlink control channel (PDCCH). If contention occurs between two or more terminals in Step 1, a contention will continue to occur in Step 3 because they will transmit message3 based on the same information, but the terminal identifiers included in the MAC control element (MAC CE) of message3 are different.

Step 4: if the base station correctly decodes message3, it transmits message 4 to the terminal. The message4 is addressed using the T_C_RNTI of the received message3, and the MAC CE in message 4 includes the identifier that the terminal included in message3 and a newly assigned C-RNTI for the terminal. If multiple terminals transmit message3 on the same UL-grant, the base station may be able to correctly decode one of them, or may fail to decode any (e.g., in a case of comparable interference levels between them). When the terminal receives message4, if it finds that the T_C_RNTI convolved on the PDCCH matches the one it used for transmitting message3, the terminal device will further check whether the MAC CE in message4 transmitted by the base station matches its own terminal ID. Only when the terminal ID also matches can the terminal determine that the random access procedure is completed and take the newly assigned C-RNTI as its own identity identifier. The identity identifier is used for addressing information in subsequent PHY, MAC and RRC layer protocols.

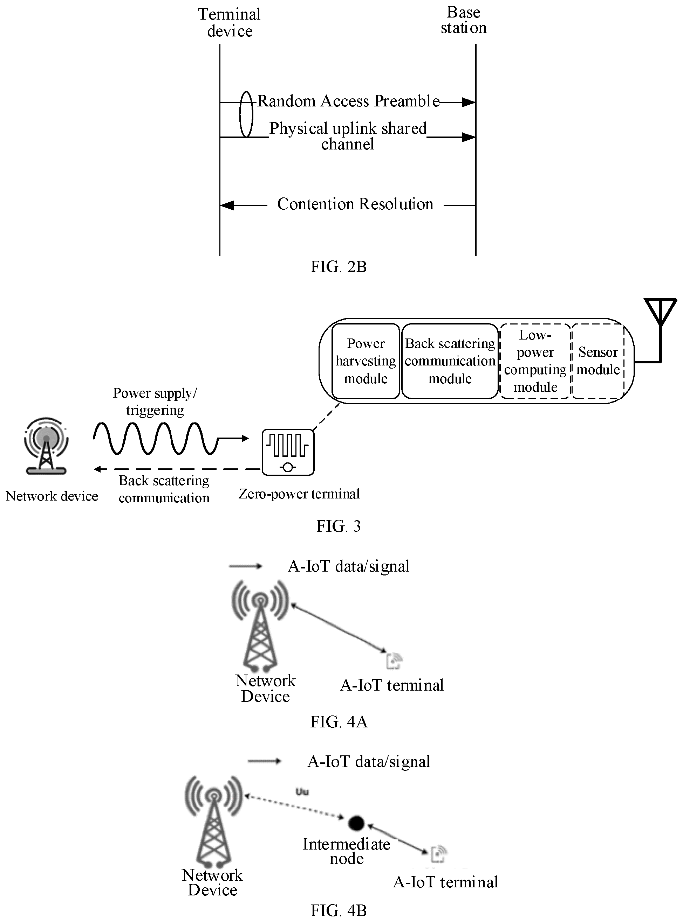

Logically, the 2-step random access procedure combines steps 1 and 3 of the 4-step random access procedure for the transmission of message A, and combines steps 2 and 4 of the 4-step random access procedure for the transmission of messageB. FIG. 2B is a schematic flowchart of a 2-step CBRA, and as illustrated in FIG. 2B, the 2-step CBRA includes 2 steps.

Step A: the terminal transmits messageA to the base station, which includes a random access preamble and a data channel physical uplink shared channel (PUSCH). The PUSCH includes the UE ID of the terminal.

Step B: the base station transmits a response messageB. There are two ways to address the terminal in messageB.

B1: if the UE ID in messageA is a C-RNTI, then the C-RNTI is also convolved on the physical downlink control channel (PDCCH) of messageB. In this case, if the terminal can determine that the C-RNTI in messageB matches its own C-RNTI, it considers that the random access procedure is successfully completed, that is, the contention is resolved. This scenario B1 is applied to a terminal in the RRC_CONNECTED state, where the terminal has completed initial access and established an RRC connection with the network.

B2: if the UE ID in messageA is an identifier other than C-RNTI, then the RA-RNTI is convolved on the PDCCH of messageB. Scenario B2 is applied to all scenarios other than B1. If the UE ID included in the SuccessRAR of messageB matches its own UE ID, the terminal considers that its random access procedure is successful and the contention is resolved. Otherwise, the terminal will either retransmit messageA or fall back to the 4-step RACH to transmit message1.

### (II) Ambient IoT (A-IoT)

The rise of IoT presents new challenges to communication systems. IoT terminals are applied in situations, such as logistics, warehousing, factory automation and animal husbandry. These IoT terminals only need to perform simple communication processes intermittently with the network or perform rough positioning and tracking. In the current market, even the simplest IoT terminals such as Narrowband IoT (NB-IoT) terminals used for coal and electricity metering, require batteries to supply power. Although the power consumption is very low, the batteries in these terminals will eventually be exhausted after several years at most. As a result, replacing these batteries requires substantial manual labor. Moreover, some industrial scenarios are too dangerous to be suitable for manual operation at all. Based on this, battery-free IoT terminals emerged.

Battery-free IoT terminals are numerous and low-cost, and generally, do not require manual maintenance after installation. To some extent, radio frequency identification (RFID) terminals meet the requirement. Nevertheless, the operation of an RFID system itself requires the participation of a manual handheld reader. Moreover, because the wireless coverage of a single RFID reader is limited (within 10 meters), for example, when taking inventory of goods in a large supermarket, considerable manpower, material resources and time are still required.

Transplanting a communication system similar to RFID into the 3GPP cellular network can effectively address the coverage issue. This is because deployed cellular networks, such as 4G and 5G, generally have achieved nationwide coverage or at least coverage of major cities. The advantage of full coverage is that the communications or positioning processes between the IoT terminal and the network do not require manual participation, so it can work continuously 7 days a week, 24 hours a day, with high operation efficiency, and can even operate effectively in environments unsuitable for humans (such as open fields, mines and factories). In this way, except for requiring association of the IoT terminal with a specific object at the initial stage, subsequent data read/write and operation/maintenance can be performed through an APP on a smartphone, which is very convenient and efficient.

Such a communication system is referred to as an A-IoT communication system or a zero-power communication system. A-IoT communication adopts power harvesting and backscatter communication technologies. An A-IoT communication network consists of a network device and an A-IoT terminal (which may also be referred to as an A-IoT device, a zero-power terminal, an electronic label or a tag). FIG. 3 illustrates a schematic diagram of a basic architecture of an A-IoT communication system. The network device is used to transmit wireless power supply signals and downlink communication signals to the tag, and to receive backscatter signals from the tag. A basic tag includes a power harvesting module, a backscattering communication module and a low-power computing module. In addition, the tag may also have a memory or a sensor for storing some basic information (e.g., item identifiers) or acquiring sensory data such as ambient temperature and ambient humidity.

At present, the use cases that can be served by A-IoT systems mainly include: inventory, sensor, tracking and command. Inventory refers to performing gap analysis and remediation on goods when goods enter or leave a warehouse. Common sensors include a temperature sensor, a pressure sensor, a humidity sensor, and so on, which are used in industrial, agricultural, smart city, and other scenarios. Sensor information is uploaded to a certain third-party app through the A-IoT system for monitoring and management. Tracking generally refers to intermittently obtaining the approximate location of an object; for example, a user could learn the location of his package in near real-time through a smartphone. Command refers to operating a certain servo mechanism through the A-IoT communication system, where the servo mechanism is connected to the A-IoT terminal. For example, during a break at the office, one could water the plants in the backyard through a mobile phone app, where the watering servo mechanism is connected to a certain A-IoT terminal.

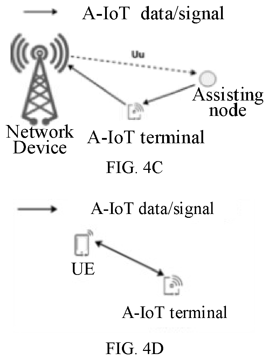

For the above use cases, four topological network structures have been proposed in the related art. FIGs. 4A to 4D illustrate schematic diagrams of the four topological network structures, respectively. As illustrated in FIG. 4A, the A-IoT terminal can be connected to the network device for bidirectional communication. As illustrated in FIG. 4B, the A-IoT terminal can be connected to the intermediate node for bidirectional communication, and the intermediate node is connected to the network device for bidirectional communication. Optionally, the intermediate node may be a UE, connected to the network device for communication via the Uu interface. As illustrated in FIG. 4C, the A-IoT terminal may receive a power supply signal/downlink communication signal transmitted by the assisting node and transmit the uplink signal to the network device. Optionally, the assisting node may be a UE, connected to the network device for communication via the Uu interface. As illustrated in FIG. 4D, the A-IoT terminal can be connected to the UE for bidirectional communication.

The energy source of the A-IoT terminal (tag) comes from the surrounding environment, such as radio frequency (RF) waves, solar energy, thermal energy, mechanical vibrations or wind energy. In the A-IoT systems currently being studied by 3GPP, terminals are mainly categorized into three types: Type A, Type B and Type C. Type A and Type B terminals can only communicate by reflecting and modulating received radio waves; and this communication method is referred to as back-scattering. That is, they cannot actively transmit radio signals, and their power is in the range of 1 to 10 microwatts (µW). Type A terminals have the lowest transmission power and the lowest hardware complexity, basically close to the level of RFID terminals. Type B terminals have slightly more complex hardware, for example, having signal amplification devices and certain power storage devices, so the communication distance with the network is longer than that of Type A. Type C terminals have the ability to actively transmit radio waves, with a transmit power of approximately 1 to 10 milliwatts (mW), and can store a certain amount of energy. All three types of terminals can harvest energy from the environment and operate continuously for several years or more than a decade. To save power, Type A and Type B terminals are basically in a dormant state before the network triggers a communication process; they only wake up for operation after being stimulated by the radio signal of the network.

Receivers of the A-IoT can be categorized into two main types.

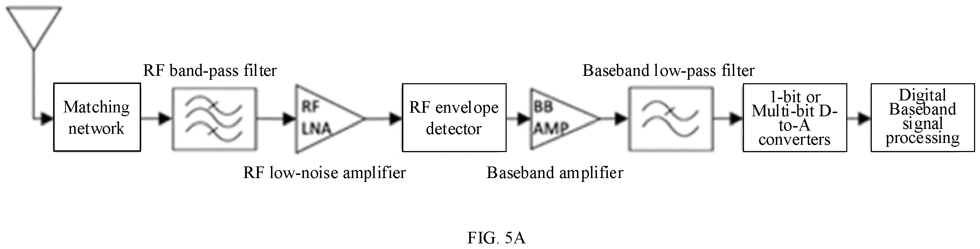

Receiver type I: broadband receiver. This type of receiver, also referred to as an RF receiver, obtains signals within the bandwidth range to be received based on a radio frequency band-pass filter, then performs envelope detection and subsequent baseband processing. This architecture has the simplest structure, and its power consumption may be as low as several microwatts (µW) or even lower. However, due to the poor accuracy of the radio frequency band-pass filter, even when the target signal occupies a narrow bandwidth, this receiver often receives signals within a relatively wide bandwidth, and thus, more noise and interference are introduced during the reception process, resulting in poor receiver performance, i.e., poor sensitivity. FIG. 5A is a structural diagram of a typical broadband receiver.

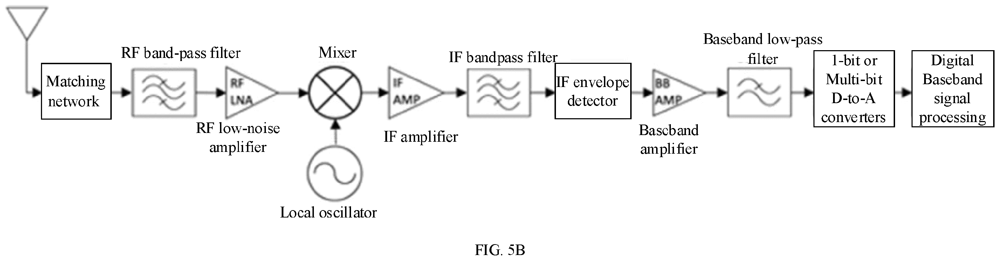

Receiver Type II: narrowband receiver. Typical examples include an intermediate frequency receiver and a zero-intermediate frequency receiver. During the signal reception, in addition to obtaining signals within the bandwidth range to be received using an RF band-pass filter, the RF signal is also down-converted and a low-pass filter is used on the baseband signal to further filter and eliminate noise and interference. Therefore, this receiver has a narrow reception bandwidth, and its reception performance, i.e., receiver sensitivity, is high. However, this receiver requires the use of a Local Oscillator (LO). Even a suggested LO has a power consumption of 100 uW or even higher, so the power consumption of this receiver is relatively high. However, because its absolute power consumption is very low, it is still suitable for use in zero-power devices. FIG. 5B is a structural diagram of a typical intermediate frequency receiver.

The above Type A terminals typically employ the broadband receiver, Type C terminals typically use the narrowband receiver, and Type B terminals may utilize either one or both receiver types.

For A-IoT systems and terminals, the random access procedure of LTE/NR systems is overly complex and requires further simplification and optimization.

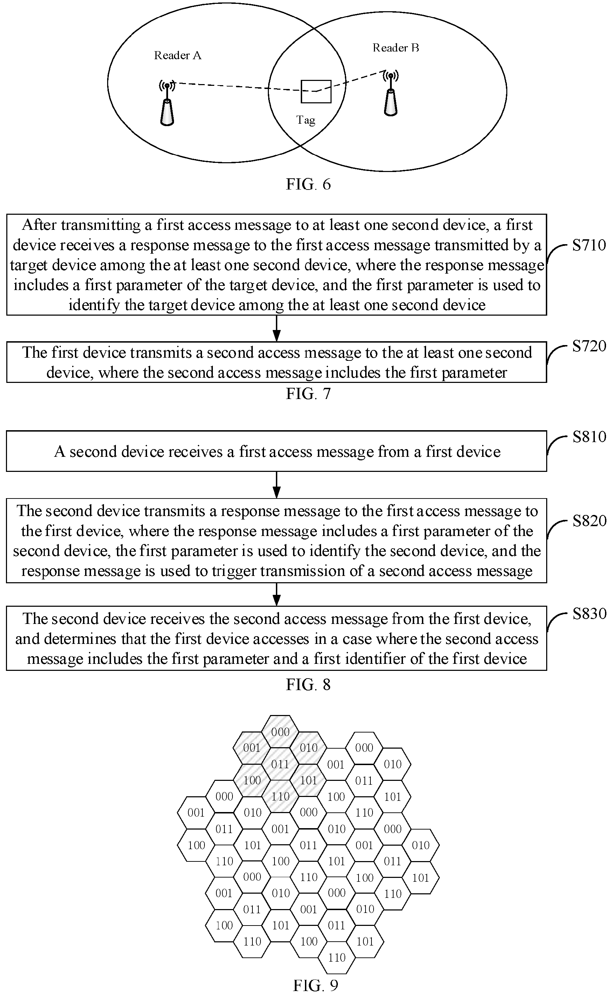

In addition, when the reader of the RFID system operates, due to the limited coverage of the reader and the fact that it is basically manually operated, it may be basically assumed that one tag will only communicate with one reader. However, the A-IoT system is a 3GPP wide-coverage system, meaning that the distribution of different readers relative to one another is essentially the same as the layout of existing base stations. FIG. 6 is a schematic diagram of an application scenario according to an embodiment of the present application. As illustrated in FIG. 6, a tag is likely to be within the coverage of different readers.

The most typical application scenario of the A-IoT system, inventory, usually requires a large number of tags to access the system within a short period of time. To improve the degree of frequency reuse, the frequency resources used by different readers are often the same, and similar or identical approaches are adopted for channelization, and the number of channels on one carrier is also limited. When a tag responds to a trigger message of a certain reader and initiates the initial access procedure, the message it transmits is easily received by multiple neighboring readers. Similarly, signals transmitted from different readers are also easily received by the same tag. Generally, this problem does not exist in LTE/NR systems because, in broadband systems, even if the carriers used by neighboring base stations are the same, the PRACH resources used for initial access are still easily staggered in the time-frequency domain. Even if there is overlap in the time-frequency domain, it is still possible to further manipulate the preamble generation codes, so that the ZC codes used for preambles generated by different cells are orthogonal to each other, for example, by using different ZC root codes. Stepping back, even if a contention occurs in the broadband system such as LTE/NR, these broadband systems have relatively comprehensive inter-cell interference cancellation means to solve the problem. In contrast, the narrowband system such as the A-IoT, with its simple signal modulation and message exchange, makes that such a system is quite sensitive to inter-cell interference and lacks effective means to mitigate or eliminate it.

FIG. 7 is a schematic flowchart of an access method according to an embodiment of the present application. Optionally, the method may be applied in the networks illustrated in FIGs. 4A to 4C, but is not limited thereto. The method includes the following.

In S710: after transmitting a first access message to at least one second device, a first device receives a response message to the first access message transmitted by a target device among the at least one second device, where the response message includes a first parameter of the target device, and the first parameter is used to identify the target device among the at least one second device.

In S720: the first device transmits a second access message to the at least one second device, where the second access message includes the first parameter.

In the embodiments of the present application, the first device may be a terminal device. Optionally, the first device may be an IoT terminal, such as, an A-IoT device, a zero-power terminal, or an electronic tag.

In the embodiments of the present application, the second device may be a node in the system/network. Optionally, the second device may be a node used for communication with the first device. The node may be a terminal device, a network device, or a node that independently provides backscatter radio waves (a power supply node). For example, the second device may be the network device (e.g., a base station) illustrated in FIG. 4A, the intermediate node illustrated in FIG. 4B, the assisting node illustrated in FIG. 4C, or the UE illustrated in FIG. 4D. It is to be understood that the embodiments of the present application do not limit the topology structure in the network. Therefore, the second device is not limited to the above various forms and may include any form of node capable of point-to-point communication with the first device.

The above access method may be applied in a scenario where the first device may be within the coverage of multiple second devices, such as the scenario illustrated in FIG. 6, which can resolve the contention issues among the multiple second devices. Specifically, in the scenario where the first device may be within the coverage of multiple second devices, the first access message transmitted by the first device may be received by one or more second devices. Each of the second devices may transmit a response message. Since the distances between each second device and the first device may be different, the first device may not be able to correctly receive the response message from every second device. When the first device receives a response message from a certain second device (while the response messages from other second devices are interference signals), that second device is the target device. The first device may encode the first parameter of the target device into the second access message for transmission, so that each second device that receives the second access message compares its own first parameter with the first parameter in the second access message to determine how to process the second access message, thereby resolving the interference/contentions among the multiple second devices. It is to be understood that in practical applications, the target device is generally a second device closest to the first device.

It can be seen that in the embodiments of the present application, the first parameter is introduced to differentiate different second devices, i.e., to identify a specific second device among at least one second device. In some scenarios, the first parameter may be referred to as a Reader Color Code (RCC) parameter. Based on the first parameter, differentiated processing of multiple second devices during the initial access procedure can be achieved, resolving the contentions among different second devices. In addition, according to the above access method, the first device may establish a wireless link with the closest second device, which helps to ensure the performance of the initial access and subsequent communication processes.

The embodiments of the present application also provide an access method from the perspective of a second device. Specifically, FIG. 8 is a schematic flowchart of an access method according to another embodiment of the present application. The method includes the following.

In S810: a second device receives a first access message from a first device.

In S820: the second device transmits a response message to the first access message to the first device, where the response message includes a first parameter of the second device, the first parameter is used to identify the second device, and the response message is used to trigger transmission of a second access message.

In S830: the second device receives the second access message from the first device, and determines that the first device accesses in a case where the second access message includes the first parameter and a first identifier of the first device.

Optionally, the second device may determine whether the second access message is intended for accessing the second device according to whether the second access message includes the first parameter of the second device; or in other words, determine whether the second device is the target device for initial access. In a case where the second access message includes the first parameter of the second device, the second device may determine that the first device corresponding to the first identifier accesses based on the first identifier in the second access message.

It is to be understood that, according to the above method, each second device may determine whether the first device accesses according to the second access message, thereby achieving differentiation of the accessed second devices during the initial access procedure and resolving the contentions among different second devices.

Optionally, the second access message is also used to indicate other second devices other than the target device to release a context related to the first device. Accordingly, for any second device, the access method may also include:
releasing, by the second device, a context related to the first device in a case where the second access message includes the first identifier of the first device but does not include the first parameter of the second device.

Specifically, in a case where the second access message does not include the first parameter of the second device, the second device may determine that the second access message is not intended for accessing the second device, and thus, can release the relevant context, and further release the context related to the first device according to the first identifier in the second access message.

In some embodiments, the first parameter of the target device is unique within a global coverage or a local coverage of a communication system.

One implementation is that the first parameter of the target device is unique within the global coverage of the communication system, that is, the first parameter of the target device is different from the first parameter of any other second device within the global coverage of the communication system. Similarly, for any second device, the first parameter of the second device is also unique within the global coverage of the communication system. In this way, the target device can be differentiated from other second devices within the global coverage, thereby ensuring that the contention is resolved.

Another implementation is that the first parameter of the target device is unique within the local coverage of the communication system, that is, the first parameter of the target device is different from the first parameter of any other second device within the communication system. Similarly, for any second device, the first parameter of the second device is unique within the local coverage of the communication system.

FIG. 9 is a schematic diagram illustrating a method for allocating a first parameter in an application example. Each hexagon represents a range that can be covered by one second device, and 3-bit information (000, 001, 010, 011, 100, 101, 110) in the hexagon is the first parameter of the second device represented by that hexagon. It can be seen that, among the seven second devices centered on any one second device, the first parameter of each second device is different from each other, that is, each second device is unique within the local coverage of the seven hexagons. Since the interference in the communication system is related to the distance between devices, the possibility of contention decreases as the distance between different second devices increases. Therefore, the first parameter of the second device being unique within the local coverage of the communication system enables the target device to be differentiated from other second devices within the local coverage, while devices that are farther away will not cause contentions with the target device. Thus, it can be ensured that the contention is resolved.

In some embodiments, the number of bits of the first parameter of the target device (or the second device) is related to the number of second devices within the global coverage or the local coverage of the communication system.

Specifically, if the first parameter is unique within the global coverage, the number of bits of the first parameter is related to the number of second devices within the global coverage. If the first parameter is unique within the local coverage, the number of bits of the first parameter is related to the number of second devices within the local coverage.

In some embodiments, in a case where the number of second devices increases, the number of bits of the first parameter increases or remains unchanged.

In practical applications, the number of second devices within the local coverage varies according to different application scenarios, so the number of bits (or the bit length) of the first parameter may be configured differently in different scenarios. Taking FIG. 9 as an example, a 3-bit first parameter may be used when the local coverage includes seven second devices. In practical engineering, some scenarios may be relatively simple; for instance, in an indoor scenario, there may be only a few readers, and thus the first parameter of the reader could be 2 bits or even 1 bit. However, in an outdoor scenario, readers may be more densely distributed, and the first parameter of the reader might require 4 bits. By adopting the above embodiments, the number of bits of the first parameter increases or remains unchanged as the number of second devices increases, thereby ensuring that a unique first parameter within the local coverage can be assigned to each second device within an appropriate bit length.

It is to be noted that in the embodiments of the present application, a certain message including the first parameter specifically refers to a case that the first parameter may be encoded in physical layer information or in a Layer 2 (L2) message, such as encoded in the MAC layer or RRC layer. Optionally, the first parameter may appear as a standalone parameter in the message or be encoded together with other parameters.

In some embodiments, the first access message includes a first identifier of the first device. The first device transmitting the second access message to the at least one second device includes: transmitting, by the first device, the second access message to the at least one second device in a case where a first identifier in the response message is the same as the first identifier of the first device; where the second access message further includes the first identifier of the first device, and the first identifier in the second access message is used by the target device to determine that contention is resolved.

Correspondingly, from the perspective of the second device, the transmitted response message after receiving the first access message includes the first identifier of the first device, and the first identifier of the first device is determined based on the first access message. The access method further includes: determining, by the second device, that contention is resolved for access of the first device in a case where the second access message includes the first parameter of the second device and the first identifier of the first device.

Specifically, the first device carries its own first identifier when transmitting the first access message. At least one second device receives the first access message, and then each second device carries the first identifier of the first device in the response message. When the response message includes the first identifier of the first device, the first device may consider that, in the present initial access, the contentions among the first device and other devices (e.g., IoT terminals) have been resolved; and then, the first device transmits the second access message to enable the second device to determine that contentions with other second devices have been resolved.

In some embodiments, the response message received by the first device includes a second identifier assigned by the target device to the first device. The second identifier is used for message addressing after access. It is to be understood that the response message transmitted by any second device includes a second identifier assigned by the second device to the first device. The second identifier may be used in subsequent procedures, that is, the second identifier is used to differentiate the first device from other devices in subsequent procedures.

Optionally, the content of the uplink message to be transmitted by the first device may be carried by the first access message, or encoded in the first access message. In some scenarios, such as reporting of monitoring/sensing information or inventory, the content of the uplink message to be transmitted by the first device has already been transmitted to the second device via the first access message, and there are no subsequent procedures. In this case, the response message may not include the second identifier, that is, the second device does not need to assign the second identifier to the first device.

In some embodiments, the second identifier in the response message received by the first device is determined based at least on the first parameter of the target device. That is, for any second device, the second identifier assigned to the first device in the response message is determined based at least on the first parameter of the second device.

Since the first parameter is encoded in the second identifier, the second identifiers assigned by second devices having different first parameters are definitely different. Therefore, the above embodiment facilitates achieving the second identifier unique within the local coverage of the communication system, rather than only unique among multiple first devices simultaneously accessing the target device, thereby avoiding the problem of message addressing between the first device and the target device after initial access.

In some embodiments, the first identifier of the first device may be determined based on a random number. Optionally, before the first device transmits the first access message to the at least one second device, the access method may further include: determining, by the first device, the first identifier of the first device based on a random number. For example, the first device may take a random number currently generated as the first identifier of the first device.

To provide a clearer understanding of the technical solution described above, a specific application example is provided below, taking the initial access between a tag (the first device) and a reader (the second device) as an example.

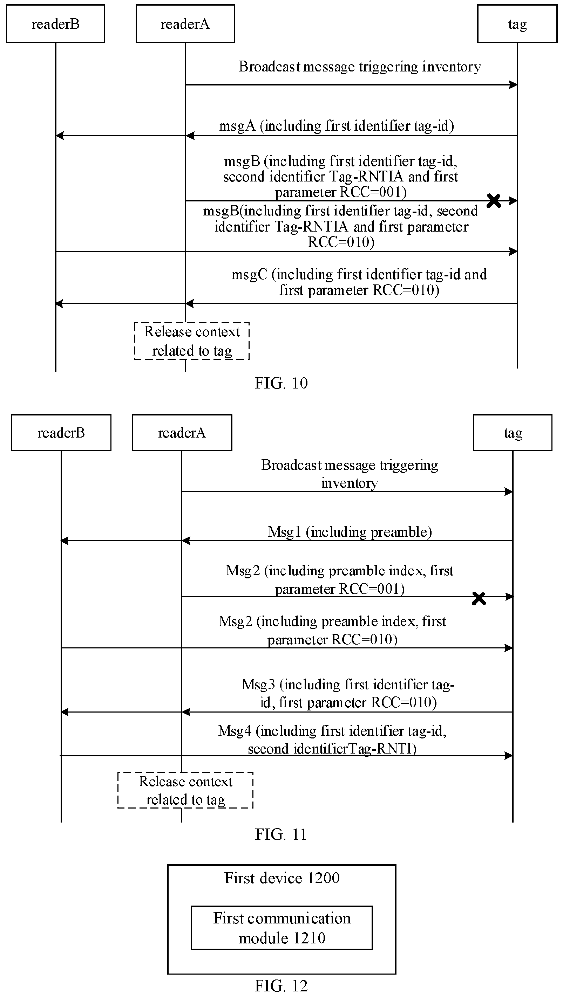

FIG. 10 illustrates a schematic diagram of application example I of an access method according to an embodiment of the present application. In this application example, the distance between the tag and reader B is less than the distance between the tag and reader A. As illustrated in FIG. 10, the access method includes the following steps.

Step 1: after receiving a broadcast message triggering inventory from reader A, the tag initiates an initial access procedure. Specifically, the tag transmits message A (msgA, the first access message), where msgA includes at least a tag-id (the first identifier). This tag-id may be an internally generated random number.

Step 2: both reader A and reader B receive msgA, and each of reader A and reader B transmits a response message, and the response message is message B (msgB, the response message to the first access message). msgB includes at least the tag-id, the Tag-RNTI (the second identifier) assigned by the reader to the tag, and the RCC parameter (the first parameter) of the reader. Since reader B is closer to the tag than reader A, msgB from reader B has a higher signal strength when the two msgBs are received by the tag. Consequently, the tag decodes the msgB from reader B, while the msgB from reader A is the interference signal. The tag finds that the tag-id included in the msgB is equal to the tag-id it transmitted and considers that the contention of this initial access (i.e., contention among tags within the reader) has been resolved.

Step 3: the tag transmits message C (msgC, the second access message). msgC includes at least the tag-id and the RCC parameter of reader B.

Step 4: after receiving msgC, reader A finds that the RCC parameter included in this message is different from its own RCC parameter, and therefore releases the local context related to the tag. After receiving msgC, reader B finds that the RCC parameter included in this message is equal to its own RCC parameter, and considers that the contention between readers has been resolved.

In the above application example, the tag does not actually know which reader is closer before the procedure starts. When the tag receives the response message to its first message, the feedback signal from the closer reader generally has higher strength (a higher SINR). The message with a higher strength signal can be correctly decoded, while the message with a weaker strength signal is treated as the interference signal. Therefore, in this way, the tag establishes a wireless link with the closest reader, which helps to ensure the performance of the initial access and subsequent communication procedures.

In other embodiments, the second access message further includes the first identifier of the first device. The first parameter in the second access message is used by the target device to determine that contention is resolved, so as to trigger the target device to transmit an access acknowledgement message. Specifically, after determining the first parameter of the target device, the first device carries the first identifier of the first device and the first parameter of the target device in the second access message, so that the target device determines that contention with other second devices is resolved based on the first parameter, and transmits the access acknowledgement message for the first device based on the first identifier.

In some embodiments, the access method further includes: receiving, by the first device after transmitting the second access message, the access acknowledgement message; and determining that initial access is successful in a case where the access acknowledgement message includes the first identifier of the first device.

Correspondingly, for any second device, the access method further includes: transmitting, by the second device, an access acknowledgement message in a case where the second access message includes the first parameter of the second device, wherein the access acknowledgement message includes the first identifier of the first device, the first identifier of the first device is determined based on the second access message, and the access acknowledgement message is used by the first device to determine that initial access is successful.

That is, the second device carries the first identifier of the first device in the access acknowledgement message, so that the first device determines that the contention with other devices has been resolved, thereby determining that the initial access is successful.

In some embodiments, the access acknowledgement message received by the first device includes a second identifier assigned by the target device to the first device, and the second identifier is used for message addressing after access. That is, when the second access message includes its own first parameter, the access acknowledgement message transmitted by the second device includes the second identifier assigned by the second device to the first device. The second identifier can be used in subsequent procedures, i.e., the second identifier is used to differentiate the first device from other devices in subsequent procedures.

Optionally, the content of the uplink message to be transmitted by the first device may be carried by the second access message, or encoded in the second access message. In some scenarios, such as reporting of monitoring/sensing information or inventory, the content of the uplink message to be transmitted by the first device has already been transmitted to the second device via the second access message, and there are no subsequent procedures. In this case, the access acknowledgement message may not include the second identifier, that is, the second device does not need to assign the second identifier to the first device.

In some embodiments, the second identifier in the access acknowledgement message received by the first device is determined based at least on the first parameter of the target device. That is, for any second device, the second identifier assigned to the first device in the access acknowledgement message is determined based at least on the first parameter of that second device.

Since the first parameter is encoded in the second identifier, the second identifiers assigned by second devices having different first parameters are definitely different. Therefore, the above embodiment facilitates achieving the second identifier unique within the local coverage of the communication system, rather than only unique among multiple first devices simultaneously accessing the target device, thereby avoiding the problem of message addressing between the first device and the target device after initial access.

In some embodiments, the first identifier of the first device may be determined based on a random number. Optionally, before the first device transmits the second access message to the at least one second device, the access method may further include: determining, by the first device, the first identifier of the first device based on a random number. For example, the first device may take a random number currently generated as the first identifier of the first device.

To provide a clearer understanding of the technical solution described above, a specific application example is provided below, taking the initial access between a tag (the first device) and a reader (the second device) as an example.

FIG. 11 illustrates a schematic diagram of application example II of an access method according to an embodiment of the present application. In this application example, the distance between the tag and reader B is less than the distance between the tag and reader A. As illustrated in FIG. 11, the access method includes the following steps.

Step 1: after receiving a broadcast message triggering inventory from reader A, the tag initiates an initial access procedure. Specifically, the tag transmits message 1 (msg1, the first access message), where msg1 includes a randomly selected preamble. The preamble is modulated using a sequence. The number of these sequences is finite, for example, 16 in total, and each sequence has a fixed index. The reader can demodulate preambles of different sequences. If preambles modulated using the same sequence are received from different tags, the reader cannot differentiate the different tags, i.e., they may be demodulated as one preamble.

Step 2: after receiving the preamble, reader A and reader B transmit message 2 (msg2, the response message to the first access message), respectively. msg2 includes at least the preamble index and the RCC parameter of the reader (the first parameter). Since the signal strength of msg2 from reader B is relatively high, finally, the tag correctly decodes the msg2 from reader B. The msg2 from reader A becomes an interference signal.

Step 3: after receiving the preamble index, the tag compares it with the index of the preamble it just transmitted. If the two indices are the same, the tag transmits message 3 (msg3, the second access message) to the reader, where msg3 includes at least the tag-id (the first identifier) and the RCC parameter; otherwise, it considers that this initial access has failed. The tag-id may be a random number generated by the tag itself.

Step 4: reader A finds that the RCC in the received msg3 is not equal to its own RCC, considers that this initial access procedure is ended, and releases the context of the tag. Reader B finds that the RCC in msg3 is equal to its own RCC, and feeds back message 4 (msg4, the access acknowledgement message) to the tag, where msg4 includes at least the received tag-id and the identifier Tag-RNTI (the second identifier) assigned to the tag. When the tag receives this message, if it finds that the received tag-id is equal to the one it transmitted, the tag considers that this initial access has been successful, and uses the received Tag-RNTI as its own identifier for subsequent procedures.

In the above application example, the tag does not actually know which reader is closer before the procedure starts. When the tag receives the response message to its first message, the feedback signal from the closer reader generally has higher strength (a higher SINR). The message with a higher strength signal can be correctly decoded, while the message with a weaker strength signal is treated as the interference signal. Therefore, in this way, the tag establishes a wireless link with the closest reader, which helps to ensure the performance of the initial access and subsequent communication procedures.

FIG. 12 is a schematic block diagram of a first device 1200 according to an embodiment of the present application. The first device 1200 may include:
a first communication module 1210, configured to receive, after transmitting a first access message to at least one second device, a response message to the first access message transmitted by a target device among the at least one second device, where the response message includes a first parameter of the target device, and the first parameter is used to identify the target device among the at least one second device; and
the first communication module 1210, further configured to transmit a second access message to the at least one second device, where the second access message includes the first parameter.

In an implementation, the first parameter of the target device is unique within a global coverage or a local coverage of a communication system.

In an implementation, a number of bits of the first parameter of the target device is related to a number of second devices within a global coverage or a local coverage of a communication system.

In an implementation, in a case where the number of the second devices increases, the number of bits of the first parameter increases or remains unchanged.

In an implementation, the second access message is further used to indicate other second devices other than the target device to release a context related to the first device.

In an implementation, the first access message includes a first identifier of the first device; and
the first communication module 1210 is further configured to transmit the second access message in a case where a first identifier in the response message is the same as the first identifier of the first device, where the second access message further includes the first identifier of the first device, and the first identifier in the second access message is used by the target device to determine that contention is resolved.

In an implementation, the response message further includes a second identifier assigned by the target device to the first device, and the second identifier is used for message addressing after access.

In an implementation, the second access message further includes a first identifier of the first device; and the first parameter in the second access message is used by the target device to determine that contention is resolved, to trigger the target device to transmit an access acknowledgement message.

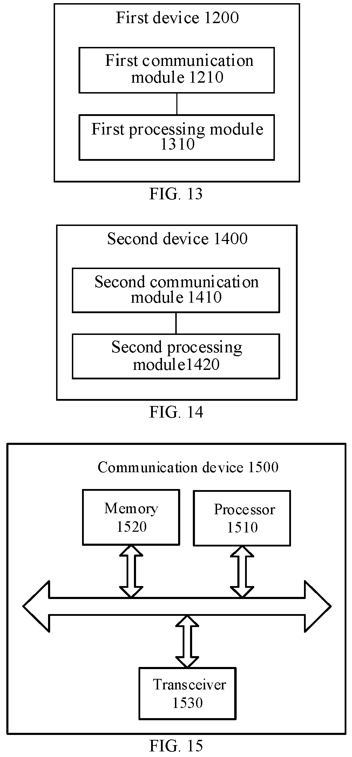

In an implementation, the first communication module 1210 is further configured to receive the access acknowledgement message after transmitting the second access message; and as illustrated in FIG. 13, the first device 1200 further includes a first processing module 1310, and the first processing module 1310 is configured to:
determine that initial access is successful in a case where the access acknowledgement message includes the first identifier of the first device.

In an implementation, the access acknowledgement message includes a second identifier assigned by the target device to the first device, and the second identifier is used for message addressing after access.

In an implementation, the second identifier is determined based at least on the first parameter of the target device.

In an implementation, the first identifier of the first device is determined based on a random number.

The first device 1200 in the embodiments of the present application is capable of implementing the corresponding functions of the first device in the above method embodiments. The processes, functions, implementations and beneficial effects corresponding to various modules (sub-modules, units, components and so on) in the first device 1200 may refer to the corresponding descriptions in the above method embodiments, and will not be repeated here for brevity. It is to be noted that the functions described with respect to the various modules (sub-modules, units, components and so on) in the first device 1200 of the embodiments of the present application may be implemented by different modules (sub-modules, units, components and so on) or by the same module (sub-module, unit, component and so on).

FIG. 14 is a schematic block diagram of a second device 1400 according to an embodiment of the present application. The second device 1400 may include:
a second communication module 1410, configured to receive a first access message from a first device, transmit a response message to the first access message to the first device, and receive a second access message from the first device, where the response message includes a first parameter of the second device, the first parameter is used to identify the second device, and the response message is used to trigger transmission of the second access message; and
a second processing module 1420, configured to determine that the first device accesses in a case where the second access message includes the first parameter and a first identifier of the first device.

In an implementation, the first parameter of the second device is unique within a global coverage or a local coverage of a communication system.

In an implementation, a number of bits of the first parameter of the second device is related to a number of second devices within a global coverage or a local coverage of a communication system.

In an implementation, in a case where the number of the second devices increases, the number of bits of the first parameter increases or remains unchanged.

In an implementation, the second processing module 1420 is further configured to:
release a context related to the first device in a case where the second access message includes the first identifier of the first device but does not include the first parameter of the second device.

In an implementation, the response message includes the first identifier of the first device, and the first identifier of the first device is determined based on the first access message; and
the second processing module 1420 is further configured to:
determine that contention is resolved for access of the first device in a case where the second access message includes the first parameter of the second device and the first identifier of the first device.

In an implementation, the response message includes a second identifier assigned by the second device to the first device, and the second identifier is used for message addressing after access.

In an implementation, the second communication module 1410 is further configured to:
transmit an access acknowledgement message to the first device in a case where the second access message includes the first parameter of the second device, where the access acknowledgement message includes the first identifier of the first device, the first identifier of the first device is determined based on the second access message, and the access acknowledgement message is used by the first device to determine that initial access is successful.

In an implementation, the access acknowledgement message includes a second identifier assigned by the second device to the first device, and the second identifier is used for message addressing after access.

In an implementation, the second identifier is determined based at least on the first parameter of the second device.

In an implementation, the first identifier of the first device is determined based on a random number.

The second device 1400 in the embodiments of the present application is capable of implementing the corresponding functions of the second device in the above method embodiments. The processes, functions, implementations and beneficial effects corresponding to various modules (sub-modules, units, components and so on) in the second device 1400 may refer to the corresponding descriptions in the above method embodiments, and will not be repeated here for brevity. It is to be noted that the functions described with respect to the various modules (sub-modules, units, components and so on) in the second device 1400 of the embodiments of the present application may be implemented by different modules (sub-modules, units, components and so on) or by the same module (sub-module, unit, component and so on).

FIG. 15 is a schematic structural diagram of a communication device 1500 according to an embodiment of the present application. The communication device 1500 includes a processor 1510, and the processor 1510 may invoke a computer program from a memory and execute the computer program, to cause the communication device 1500 to implement the methods in the embodiments of the present application.

In an implementation, the communication device 1500 may further include a memory 1520. The processor 1510 may invoke a computer program from the memory 1520 and execute the computer program, to cause the communication device 1500 to implement the methods in the embodiments of the present application.

The memory 1520 may be a separate device independent of the processor 1510, or may be integrated into the processor 1510.

In an implementation, the communication device 1500 may further include a transceiver 1530. The processor 1510 may control the transceiver 1530 to communicate with other devices, and specifically, to transmit information or data to other devices, or receive information or data transmitted by other devices.

The transceiver 1530 may include a transmitter and a receiver. The transceiver 1530 may further include antenna(s), and the number of antenna(s) may be one or more.

In an implementation, the communication device 1500 may be the first device in the embodiments of the present application, and the communication device 1500 may implement the corresponding procedures implemented by the first device in the various methods of the embodiments of the present application, which will not be repeated here for the sake of brevity.

In an implementation, the communication device 1500 may be the second device in the embodiments of the present application, and the communication device 1500 may implement the corresponding procedures implemented by the second device in the various methods of the embodiments of the present application, which will not be repeated here for the sake of brevity.

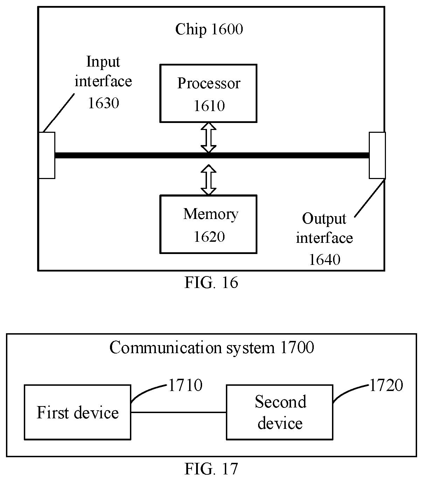

FIG. 16 is a schematic structural diagram of a chip 1600 according to an embodiment of the present application. The chip 1600 includes a processor 1610, and the processor 1610 may invoke a computer program from a memory and execute the computer program, to implement the methods in the embodiments of the present application.

In an implementation, the chip 1600 may further include a memory 1620. The processor 1610 may invoke a computer program from the memory 1620 and execute the computer program, to implement the methods performed by the first device or the second device in the embodiments of the present application.

The memory 1620 may be a separate device independent of the processor 1610, or may be integrated into the processor 1610.

In an implementation, the chip 1600 may further include an input interface 1630. The processor 1610 may control the input interface 1630 to communicate with other devices or chips. Specifically, the input interface 1630 may obtain information or data transmitted by other devices or chips.

In an implementation, the chip 1600 may further include an output interface 1640. The processor 1610 may control the output interface 1640 to communicate with other devices or chips. Specifically, the output interface 1640 may output information or data to other devices or chips.

In an implementation, the chip may be applied to the first device in the embodiments of the present application, and the chip may implement the corresponding procedures implemented by the first device in the various methods of the embodiments of the present application, which will not be repeated here for the sake of brevity.

In an implementation, the chip may be applied to the second device in the embodiments of the present application, and the chip may implement the corresponding procedures implemented by the second device in the various methods of the embodiments of the present application, which will not be repeated here for the sake of brevity.

The chips applied to the first device and the second device may be the same chip or different chips.

It is to be understood that the chip mentioned in the embodiments of the present application may also be referred to as a system on chip, a system chip, a chip system or a system-on-chip chip, or the like.

The above processor may be a general-purpose processor, a digital signal processor (DSP), a field programmable gate array (FPGA), an application specific integrated circuit (ASIC) or other programmable logic devices, transistor logic devices, discrete hardware components, or the like. The general-purpose processor mentioned above may be a microprocessor, any conventional processor, or the like.

The above memory may be a volatile memory or a non-volatile memory, or may include both volatile and non-volatile memories. The non-volatile memory may be a read-only memory (ROM), a programmable ROM (PROM), an erasable PROM (EPROM), an electrically EPROM (EEPROM) or a flash memory. The volatile memory may be a random access memory (RAM).

It should be understood that the above memory is exemplary but not limiting illustration, for example, the memory in embodiments of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM), and a direct rambus RAM (DR RAM). That is, the memory in the embodiments of the present application is intended to include, but not limited to, these and any other suitable types of memories.

FIG. 17 is a schematic block diagram of a communication system 1700 according to an embodiment of the present application. The communication system 1700 includes a first device 1710 and a second device 1720.

The first device 1710 receives, after transmitting a first access message, a response message to the first access message; where the response message includes a first parameter of a target device, the target device is the second device 1720 that transmits the response message, and the first parameter is used to identify the target device among at least one second device 1720.

The first device 1710 transmits a second access message; where the second access message includes the first parameter.

The second device 1720 receives the first access message.

The second device 1720 transmits the response message to the first access message; where the response message includes a first parameter of the second device 1720, the first parameter is used to identify the second device 1720, and the response message is used to trigger transmission of the second access message.

The second device 1720 receives the second access message, and determines that the first device 1710 accesses in a case where the second access message includes the first parameter and a first identifier of the first device 1710.

The first device 1710 may be used to implement the corresponding functions performed by the first device in the methods described above, and the second device 1720 may be used to implement the corresponding functions performed by the second device in the methods described above, which will not be repeated here for the sake of brevity.

The above embodiments may be implemented in whole or in part through software, hardware, firmware, or any combination thereof. When implemented by using software, the embodiments may be implemented in a form of a computer program product in whole or in part. The computer program product includes one or more computer instructions. When the computer program instructions are loaded on and executed by a computer, processes or functions described in the embodiments of the present application are generated in whole or in part. The computer may be a general-purpose computer, a dedicated computer, a computer network, or any other programmable devices. The computer instructions may be stored in a computer-readable storage medium or transmitted from one computer-readable storage medium to another computer-readable storage medium. For example, the computer instructions may be transmitted from a website, computer, server or data center to another website, computer, server or data center via a wired manner (such as coaxial cable, optical fiber, or digital subscriber line (DSL)) or a wireless manner (such as infrared, radio or microwave). The computer-readable storage medium may be any available medium able to be accessed by the computer, or may be a data storage device, such as a server or a data center, integrated by one or more available media. The available medium may be a magnetic medium (e.g., a floppy disk, a hard disk or a magnetic tape), an optical medium (e.g., a DVD), a semiconductor medium (e.g., a solid state drive (SSD)), or the like.

It is to be understood that, in the various embodiments of the present application, the magnitude of the serial numbers of the above-mentioned processes does not mean the order of execution. The execution order of each process should be determined by its function and internal logic, and should not constitute any limitation on the implementation process of the embodiments of the present application.

It may be clearly understood by those skilled in the art that, for convenience and brevity of the description, the specific working procedures of the systems, apparatuses and units described above may refer to the corresponding procedures in the above method embodiments, which will not be repeated here.

The above description is only specific implementation of the present application, but the protection scope of the present application is not limited thereto. Any person skilled in the art may readily conceive of variations or substitutions within the technical scope disclosed in the present application, which should be included within the protection scope of the present application. Therefore, the protection scope of the present application shall be subject to the protection scope of the claims.

## Claims

1. An access method, comprising:
receiving, by a first device after transmitting a first access message to at least one second device, a response message to the first access message transmitted by a target device among the at least one second device, wherein the response message comprises a first parameter of the target device, and the first parameter is used to identify the target device among the at least one second device; and
transmitting, by the first device, a second access message to the at least one second device, wherein the second access message comprises the first parameter.

2. The method according to claim 1, wherein the first parameter of the target device is unique within a global coverage or a local coverage of a communication system.

3. The method according to claim 1 or 2, wherein a number of bits of the first parameter of the target device is related to a number of second devices within a global coverage or a local coverage of a communication system.

4. The method according to claim 3, wherein in a case where the number of the second devices increases, the number of bits of the first parameter increases or remains unchanged.

5. The method according to any one of claims 1 to 4, wherein the second access message is further used to indicate other second devices other than the target device to release a context related to the first device.

6. The method according to any one of claims 1 to 5, wherein the first access message comprises a first identifier of the first device;
wherein transmitting, by the first device, the second access message to the at least one second device comprises:
transmitting, by the first device, the second access message to the at least one second device in a case where a first identifier in the response message is the same as the first identifier of the first device, wherein the second access message further comprises the first identifier of the first device, and the first identifier in the second access message is used by the target device to determine that contention is resolved.

7. The method according to claim 6, wherein the response message further comprises a second identifier assigned by the target device to the first device, and the second identifier is used for message addressing after access.

8. The method according to any one of claims 1 to 5, wherein the second access message further comprises a first identifier of the first device; and the first parameter in the second access message is used by the target device to determine that contention is resolved, to trigger the target device to transmit an access acknowledgement message.

9. The method according to claim 8, further comprising:
receiving, by the first device after transmitting the second access message, the access acknowledgement message; and determining that initial access is successful in a case where the access acknowledgement message comprises the first identifier of the first device.

10. The method according to claim 9, wherein the access acknowledgement message comprises a second identifier assigned by the target device to the first device, and the second identifier is used for message addressing after access.

11. The method according to claim 7 or 10, wherein the second identifier is determined based at least on the first parameter of the target device.

12. The method according to any one of claims 6 to 11, wherein the first identifier of the first device is determined based on a random number.

13. An access method, comprising:
receiving, by a second device, a first access message from a first device;
transmitting, by the second device, a response message to the first access message to the first device, wherein the response message comprises a first parameter of the second device, the first parameter is used to identify the second device, and the response message is used to trigger transmission of a second access message; and
receiving, by the second device, the second access message from the first device, and determining that the first device accesses in a case where the second access message comprises the first parameter and a first identifier of the first device.

14. The method according to claim 13, wherein the first parameter of the second device is unique within a global coverage or a local coverage of a communication system.

15. The method according to claim 13 or 14, wherein a number of bits of the first parameter of the second device is related to a number of second devices within a global coverage or a local coverage of a communication system.

16. The method according to claim 15, wherein in a case where the number of the second devices increases, the number of bits of the first parameter increases or remains unchanged.

17. The method according to any one of claims 13 to 16, further comprising:
releasing, by the second device, a context related to the first device in a case where the second access message comprises the first identifier of the first device but does not comprise the first parameter of the second device.

18. The method according to any one of claims 13 to 17, wherein the response message comprises the first identifier of the first device;
wherein the method further comprises:
determining, by the second device, that contention is resolved for access of the first device in a case where the second access message comprises the first parameter of the second device and the first identifier of the first device.

19. The method according to claim 18, wherein the response message comprises a second identifier assigned by the second device to the first device, and the second identifier is used for message addressing after access.

20. The method according to any one of claims 13 to 17, further comprising:
transmitting, by the second device, an access acknowledgement message to the first device in a case where the second access message comprises the first parameter of the second device, wherein the access acknowledgement message comprises the first identifier of the first device, the first identifier of the first device is determined based on the second access message, and the access acknowledgement message is used by the first device to determine that initial access is successful.

21. The method according to claim 20, wherein the access acknowledgement message comprises a second identifier assigned by the second device to the first device, and the second identifier is used for message addressing after access.

22. The method according to claim 19 or 21, wherein the second identifier is determined based at least on the first parameter of the second device.

23. The method according to any one of claims 13 to 22, wherein the first identifier of the first device is determined based on a random number.

24. A first device, comprising:
a first communication module, configured to receive, after transmitting a first access message to at least one second device, a response message to the first access message transmitted by a target device among the at least one second device, wherein the response message comprises a first parameter of the target device, and the first parameter is used to identify the target device among the at least one second device; and
the first communication module, further configured to transmit a second access message to the at least one second device, wherein the second access message comprises the first parameter.

25. The first device according to claim 24, wherein the first parameter of the target device is unique within a global coverage or a local coverage of a communication system.

26. The first device according to claim 24 or 25, wherein a number of bits of the first parameter of the target device is related to a number of second devices within a global coverage or a local coverage of a communication system.

27. The first device according to claim 26, wherein in a case where the number of the second devices increases, the number of bits of the first parameter increases or remains unchanged.

28. The first device according to any one of claims 24 to 27, wherein the second access message is further used to indicate other second devices other than the target device to release a context related to the first device.

29. The first device according to any one of claims 24 to 28, wherein the first access message comprises a first identifier of the first device; and
the first communication module is further configured to transmit the second access message in a case where a first identifier in the response message is the same as the first identifier of the first device, wherein the second access message further comprises the first identifier of the first device, and the first identifier in the second access message is used by the target device to determine that contention is resolved.

30. The first device according to claim 29, wherein the response message further comprises a second identifier assigned by the target device to the first device, and the second identifier is used for message addressing after access.

31. The first device according to any one of claims 24 to 28, wherein the second access message further comprises a first identifier of the first device; and the first parameter in the second access message is used by the target device to determine that contention is resolved, to trigger the target device to transmit an access acknowledgement message.

32. The first device according to claim 31, wherein the first communication module is further configured to receive the access acknowledgement message after transmitting the second access message; and
the first device further comprises a first processing module, wherein the first processing module is configured to determine that initial access is successful in a case where the access acknowledgement message comprises the first identifier of the first device.

33. The first device according to claim 32, wherein the access acknowledgement message comprises a second identifier assigned by the target device to the first device, and the second identifier is used for message addressing after access.

34. The first device according to claim 30 or 33, wherein the second identifier is determined based at least on the first parameter of the target device.

35. The first device according to any one of claims 29 to 34, wherein the first identifier of the first device is determined based on a random number.

36. A second device, comprising:
a second communication module, configured to receive a first access message from a first device, transmit a response message to the first access message to the first device, and receive a second access message from the first device, wherein the response message comprises a first parameter of the second device, the first parameter is used to identify the second device, and the response message is used to trigger transmission of the second access message; and
a second processing module, configured to determine that the first device accesses in a case where the second access message comprises the first parameter and a first identifier of the first device.

37. The second device according to claim 36, wherein the first parameter of the second device is unique within a global coverage or a local coverage of a communication system.

38. The second device according to claim 36 or 37, wherein a number of bits of the first parameter of the second device is related to a number of second devices within a global coverage or a local coverage of a communication system.

39. The second device according to claim 38, wherein in a case where the number of the second devices increases, the number of bits of the first parameter increases or remains unchanged.

40. The second device according to any one of claims 36 to 39, wherein the second processing module is further configured to:
release a context related to the first device in a case where the second access message comprises the first identifier of the first device but does not comprise the first parameter of the second device.

41. The second device according to any one of claims 36 to 40, wherein the response message comprises the first identifier of the first device; and
the second processing module is further configured to:
determine that contention is resolved for access of the first device in a case where the second access message comprises the first parameter of the second device and the first identifier of the first device.

42. The second device according to claim 41, wherein the response message comprises a second identifier assigned by the second device to the first device, and the second identifier is used for message addressing after access.

43. The second device according to any one of claims 36 to 40, wherein the second communication module is further configured to:
transmit an access acknowledgement message to the first device in a case where the second access message comprises the first parameter of the second device, wherein the access acknowledgement message comprises the first identifier of the first device, the first identifier of the first device is determined based on the second access message, and the access acknowledgement message is used by the first device to determine that initial access is successful.

44. The second device according to claim 43, wherein the access acknowledgement message comprises a second identifier assigned by the second device to the first device, and the second identifier is used for message addressing after access.

45. The second device according to claim 42 or 44, wherein the second identifier is determined based at least on the first parameter of the second device.

46. The second device according to any one of claims 36 to 45, wherein the first identifier of the first device is determined based on a random number.

47. A first device, comprising: a transceiver, a processor and a memory, wherein the memory is configured to store a computer program, the transceiver is configured to communicate with other devices, and the processor is configured to invoke the computer program stored in the memory and execute the computer program, to cause the first device to perform the method according to any one of claims 1 to 12.

48. A second device, comprising: a transceiver, a processor and a memory, wherein the memory is configured to store a computer program, the transceiver is configured to communicate with other devices, and the processor is configured to invoke the computer program stored in the memory and execute the computer program, to cause the second device to perform the method according to any one of claims 13 to 23.

49. A chip, comprising: a processor, configured to invoke a computer program from a memory and execute the computer program, to cause a device equipped with the chip to perform the method according to any one of claims 1 to 12.

50. A chip, comprising: a processor, configured to invoke a computer program from a memory and execute the computer program, to cause a device equipped with the chip to perform the method according to any one of claims 13 to 23.

51. A computer-readable storage medium, configured to store a computer program, wherein the computer program, when executed by a device, causes the device to perform the method according to any one of claims 1 to 12.

52. A computer-readable storage medium, configured to store a computer program, wherein the computer program, when executed by a device, causes the device to perform the method according to any one of claims 13 to 23.

53. A computer program product comprising computer program instructions that, when executed by a computer, cause the computer to perform the method according to any one of claims 1 to 12.

54. A computer program product comprising computer program instructions that, when executed by a computer, cause the computer to perform the method according to any one of claims 13 to 23.

55. A computer program, wherein the computer program causes a computer to perform the method according to any one of claims 1 to 12.

56. A computer program, wherein the computer program causes a computer to perform the method according to any one of claims 13 to 23.

57. A communication system, comprising:
a first device, configured to perform the method according to any one of claims 1 to 12; and
a second device, configured to perform the method according to any one of claims 13 to 23.
